# EUROPÄISCHE PATENTANMELDUNG

(11) **EP 3 851 182 A1**
(43) Veröffentlichungstag der Anmeldung: **21.07.2021**
(21) Anmeldenummer: 21151250.4
(22) Anmeldetag: 13.01.2021
(51) Int. Cl.: B01D 65/02, B01D 65/08

(54) **FILTERELEMENT**

(30) Priorität: 14.01.2020 DE 102020200350
(71) Anmelder: Robert Bosch GmbH, 70442 Stuttgart (DE)
(72) Erfinder: Horstmeyer, Nils, 71154 Nufringen (DE); Schulte Am Huelse, Sebastian, 70191 Stuttgart (DE)

(57) **Zusammenfassung**

Die Erfindung betrifft ein Filterelement zur Stofftrennung, umfassend eine Membran und einen Vibrationserzeuger. Der Vibrationserzeuger weist ein elektroaktives Polymer auf.

## Beschreibung

Die Erfindung betrifft ein Filterelement zur Stofftrennung sowie ein Betriebsverfahren für ein solches Filterelement.

### Stand der Technik

Aus dem Stand der Technik sind Membranen für Reinigungsverfahren bekannt, die sowohl im Medium Luft als auch im Medium Wasser eingesetzt werden können. Im Bereich der Luftreinigung werden diese Membranen als Filter zur Reinigung von Luftströmen mit dem Ziel der Abtrennung von Partikeln eingesetzt. Durch den Einsatz der Membranen im Bereich Wasser werden Wasserströme von partikulären, kolloidalen und gelösten Inhaltsstoffen getrennt. Somit findet durch eine physikalische Stofftrennung eine Reinigung des Mediums Luft beziehungsweise des Mediums Wasser statt. Ferner können durch die erzielte Stofftrennung auch konzentrierte Medienströme generiert werden, indem die abgetrennten Partikel beziehungsweise Inhaltsstoffe in einem geringeren Medienvolumen belassen werden.

Während des Betriebs der Membranen lagern sich die Partikel beziehungsweise Stoffe, die aus der Luft und dem Wasser entfernt werden, an den Membranen an. Um die Membranen wieder zu reinigen, können diese innerhalb oder außerhalb des Filterbetriebs mittels Chemikalien gereinigt werden. Ein alternatives Reinigungsverfahren beinhaltet eine Reinigung der Membranen mittels Vibration. Dabei ist eine hohe Energie erforderlich, da gesamte Anlagen oder große Membranmodulteile in Bewegung versetzt werden.

### Offenbarung der Erfindung

Eine Aufgabe der Erfindung ist es, ein Filterelement anzugeben, bei dem die Reinigung einen geringeren Energieaufwand erfordert. Eine weitere Aufgabe der Erfindung ist es, ein entsprechendes Betriebsverfahren anzugeben.

Diese Aufgaben werden mit den Gegenständen der unabhängigen Patentansprüche gelöst. Vorteilhafte Weiterbildungen sind in den abhängigen Patentansprüchen angegeben.

Ein Filterelement zur Stofftrennung umfasst eine Membran und einen Vibrationserzeuger. Der Vibrationserzeuger weist dabei elektroaktives Polymer auf. Es kann vorgesehen sein, dass der Vibrationserzeuger im Bereich der Membran angeordnet ist. Dadurch wird es möglich, eine Vibration membrannah in das Filterelement einzubringen und so eine Reinigungswirkung an der Membran zu erzeugen, die einen deutlich reduzierten Energieaufwand erfordert. Elektroaktive Polymere eignen sich hierzu, da elektroaktive Polymere einerseits geeignet sind, Vibrationen zu erzeugen und andererseits ihre Anwendung deutlich einfacher ist, da elektroaktive Polymere in ihrer Form deutlich flexibler sind als die in konventionellen Verfahren eingesetzten Piezokristalle beziehungsweise Rüttelmotoren. Ein Ziel ist es, eine bedarfsgerechte Reinigung zu ermöglichen, bei der die Vibration einem Verschmutzungsgrad der Membran angepasst werden kann.

Es kann beispielsweise vorgesehen sein, das elektroaktive Polymer flächig auf der Membran aufzubringen, wodurch ein guter Übertrag einer im elektroaktiven Polymer erzeugten Vibration ermöglicht wird.

In einer Ausführungsform weist das Filterelement einen Permeat-Spacer auf, der an die Membran angrenzt. Der Permeat-Spacer kann insbesondere dazu dienen, bei einem Einsatz des Filterelements in einem flüssigen Medium wie beispielsweise Wasser das Permeat, also die Flüssigkeit, die eine geringere Konzentration der auszufilternden Partikel aufweist als die Ausgangsflüssigkeit, von der Membran wegzubewegen. Der Permeat-Spacer kann dazu durchlässig für die Flüssigkeit sein. Dadurch kann ein für den Betrieb in einer Flüssigkeit vorgesehenes Filterelement verbessert werden.

In einer Ausführungsform ist der Permeat-Spacer zwischen dem elektroaktiven Polymer und der Membran angeordnet. Dies ermöglicht eine effiziente Wegführung des Permeats durch den Permeat-Spacer, während gleichzeitig über das elektroaktive Polymer sowohl der Permeat-Spacer als auch die Membran weiter einfach in Vibrationen versetzt werden können.

In einer Ausführungsform wirkt das elektroaktive Polymer als Permeat-Spacer. Dies ist insbesondere der Fall, wenn das elektroaktive Polymer durchlässig für die zu filternde Flüssigkeit ist. Dabei wird insbesondere ein effizienter Aufbau des Filterelements ermöglicht.

In einer Ausführungsform ist das elektroaktive Polymer in einem Membranhalter eingebettet. Die Membran wird vom Membranhalter gehalten. Der Membranhalter kann beispielsweise um einen Rand der Membran umlaufend ausgestaltet sein. Das elektroaktive Polymer kann in diesen Membranhalter integriert sein. Dadurch ist das elektroaktive Polymer ebenfalls umlaufend um die Membran angeordnet. Es kann ferner vorgesehen sein, dass der Membranhalter zur Gänze aus dem elektroaktiven Polymer besteht. Es kann ferner vorgesehen sein, dass in den Membranhalter mehrere Membranen eingebettet sind. Dabei können die mehreren, in den Membranhalter eingebetteten Membranen parallel zueinander angeordnet sein.

In einer Ausführungsform ist das elektroaktive Polymer stabil in einer zu filternden Flüssigkeit, insbesondere in Wasser. Dadurch kann das elektroaktive Polymer direkt auf die Membran aufgebracht werden und insbesondere auch als Permeat-Spacer verwendet werden, da die zu filternde Flüssigkeit das elektroaktive Polymer nicht angreift.

In einer Ausführungsform ist das elektroaktive Polymer mit einer Isolationsschicht flüssigkeitsdicht umschlossen. In diesem Fall kann das elektroaktive Polymer zwar nicht als Permeat-Spacer dienen, es kann jedoch eine entsprechende Abschottung des elektroaktiven Polymers mittels der Isolationsschicht erreicht werden. Dadurch können auch elektroaktive Polymere verwendet werden, die in der zu filternden Flüssigkeit nicht stabil wären.

In einer Ausführungsform weist die Membran ein organisches Material, beispielsweise ein Polymer und/oder ein keramisches Material auf. Dies ermöglicht einen einfachen und effizienten Aufbau der Membran.

Die Erfindung umfasst ferner ein Verfahren zum Betrieb eines erfindungsgemäßen Filterelements, bei dem das elektroaktive Polymer zu Vibrationen angeregt wird. Dies kann grundsätzlich während eines Reinigungsschritts, jedoch auch im Dauerbetrieb des Filterelements erfolgen. Wird die Vibration während eines Reinigungsschritts erzeugt, so können die ausgefilterten Partikel während des Reinigungsvorgangs wieder von der Membran gelöst werden. Erfolgt das Anregen der Vibration im Dauerbetrieb, kann dadurch erreicht werden, dass sich die Partikel überhaupt nicht an der Membran anlagern.

In einer Ausführungsform des Verfahrens wird eine Wechselspannung an das elektroaktive Polymer angelegt. Die Wechselspannung kann dabei eine Frequenz zwischen 50 und 200 Hertz aufweisen. Alternativ oder zusätzlich kann die Wechselspannung einen Effektivwert zwischen fünfhundert Volt und drei Kilovolt aufweisen. Die genannten Betriebsparameter der Wechselspannung sind geeignet, die Membran in eine Schwingung zu versetzen, die einerseits einen Reinigungsvorgang ermöglicht und die andererseits ein Anlagern von Partikeln an der Membran im Dauerbetrieb weitgehend vermeidet.

In einer Ausführungsform des Verfahrens werden die Frequenz und/oder der Effektivwert verändert. Es kann beispielsweise eine effizientere Reinigung erreicht werden, wenn die Amplitude der Vibration, eingestellt über den Effektivwert der Wechselspannung, oder die Frequenz der Vibration während des Reinigungsverfahrens geändert wird und somit unterschiedliche Partikel von der Membran gelöst werden können.

In einer Ausführungsform des Verfahrens wird eine Durchlässigkeit der Membran mittels des elektroaktiven Polymers eingestellt. Dabei kann es vorgesehen sein, die Durchlässigkeit mittels der erzeugten Vibration einzustellen. In einem alternativen Verfahren kann beispielsweise die Durchlässigkeit der Membran über das elektroaktive Polymer eingestellt werden, ohne dass das elektroaktive Polymer zu Vibrationen angeregt wird. Dies kann beispielsweise über eine spannungsabhängige Ausdehnung des elektroaktiven Polymers erfolgen.

Ausführungsbeispiele der Erfindung werden anhand der folgenden Zeichnungen erläutert. In der schematischen Zeichnung zeigen:
- Fig. 1: ein erstes Ausführungsbeispiel eines Filterelements;
- Fig. 2: den Einbau des ersten Ausführungsbeispiels des Filterelements in einem Rohr;
- Fig. 3: ein zweites Ausführungsbeispiel eines Filterelements;
- Fig. 4: ein drittes Ausführungsbeispiel eines Filterelements;
- Fig. 5: ein viertes Ausführungsbeispiel eines Filterelements; und
- Fig. 6: ein fünftes Ausführungsbeispiel eines Filterelements.

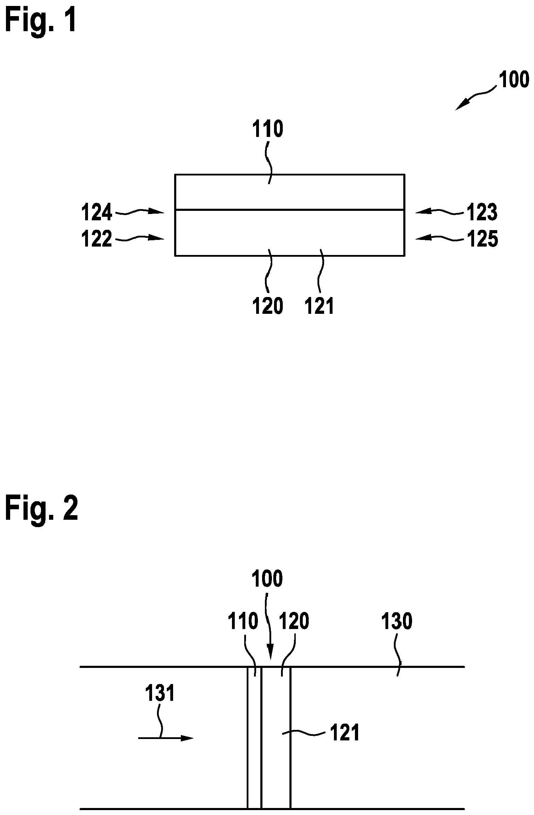

Fig. 1 zeigt ein erstes Ausführungsbeispiel eines Filterelements 100. Das Filterelement 100 kann zur Stofftrennung eingesetzt werden und umfasst eine Membran 110 sowie einen Vibrationserzeuger 120, wobei der Vibrationserzeuger 120 ein elektroaktives Polymer 121 aufweist. Insbesondere kann der Vibrationserzeuger 120 aus dem elektroaktiven Polymer 121 bestehen. Der Vibrationserzeuger 120 weist eine erste Seite 122 und eine zweite Seite 123 auf. Es kann vorgesehen sein, dass auf der ersten Seite 122 ein erster Anschluss 124 und auf der zweiten Seite 123 ein zweiter Anschluss 125 angeordnet ist. Über den ersten Anschluss 124 und den zweiten Anschluss 125 kann eine Spannung an das elektroaktive Polymer 121 angelegt werden. Dabei kann es vorgesehen sein, dass das elektroaktive Polymer 121 zu Vibrationen angeregt wird, wobei dies durch die angelegte Spannung am ersten Anschluss 124 und am zweiten Anschluss 125 ausgelöst sein kann. Es kann insbesondere vorgesehen sein, zwischen dem ersten Anschluss 124 und dem zweiten Anschluss 125 eine Wechselspannung an das elektroaktive Polymer 121 anzulegen. Die Wechselspannung kann dabei eine Frequenz zwischen 50 und 200 Hertz aufweisen. Zusätzlich oder alternativ kann die Wechselspannung einen Effektivwert zwischen fünfhundert Volt und drei Kilovolt aufweisen. Die genannten Parameter für die Wechselspannung haben sich als vorteilhaft im Hinblick auf eine Vibrationserzeugung mittels des elektroaktiven Polymers 121 gezeigt. In einem Ausführungsbeispiel kann es vorgesehen sein, die Wechselspannung, die Frequenz und/oder den Effektivwert der Wechselspannung zu variieren.

Das elektroaktive Polymer 121 kann stabil in einer zu filternden Flüssigkeit sein. Dies bedeutet insbesondere, dass das elektroaktive Polymer 121 von der zu filternden Flüssigkeit nicht angegriffen beziehungsweise zersetzt wird.

Es kann ferner vorgesehen sein, eine Durchlässigkeit der Membran 110 mittels des elektroaktiven Polymers 121 einzustellen, beispielsweise über eine am ersten Anschluss 124 und dem zweiten Anschluss 125 angelegte Gleichspannung.

Fig. 2 zeigt das Filterelement 100 der Fig. 1 eingebaut in einem Rohr 130. Innerhalb des Rohrs 130 kann ein Gas, beispielsweise Luft, oder eine Flüssigkeit, beispielsweise Wasser, in einer Fließrichtung 131 auf die Membran 110 und damit das Filterelement 100 zubewegt werden. Das Filterelement 100 kann genutzt werden, um beispielsweise aus dem Gas beziehungsweise der Flüssigkeit zu entfernen. Die Partikel können dabei am Filterelement 100 beziehungsweise der Membran 110 ausgefiltert werden, sodass hinter dem Filterelement 100 eine gereinigte Flüssigkeit beziehungsweise ein gereinigtes Gas vorliegt. Mittels des Vibrationserzeugers 120 können die Partikel wieder von der Membran 110 entfernt werden, indem beispielsweise eine Vibration mittels des elektroaktiven Polymers 121 erzeugt wird.

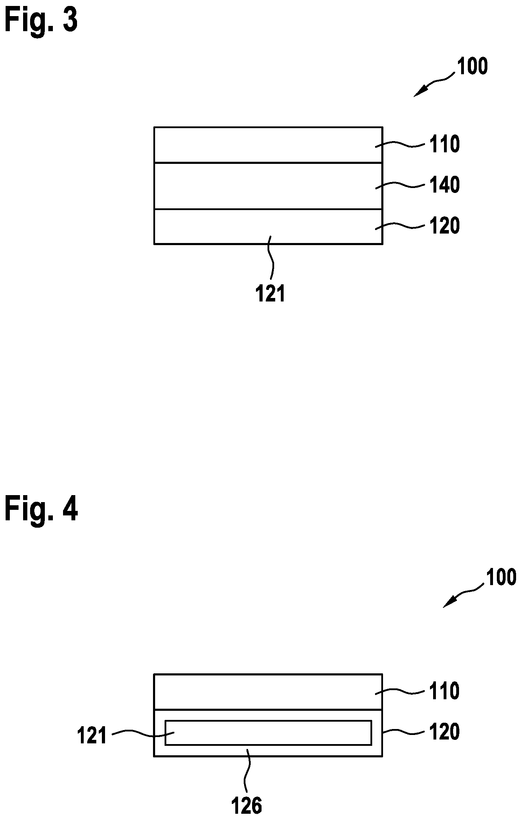

Fig. 3 zeigt ein zweites Ausführungsbeispiel eines Filterelements 100, welches dem Filterelement 100 der Figuren 1 und 2 entspricht, sofern im Folgenden keine Unterschiede beschrieben sind. Dabei kann das Filterelement 100 der Fig. 3 analog zum Filterelement 100 der Fig. 2 in das Rohr 130 eingesetzt sein. Zwischen dem Vibrationserzeuger 120 und der Membran 110 ist ein Permeat-Spacer 140 angeordnet. Der Permeat-Spacer 140 kann dabei dazu dienen, gereinigtes Gas beziehungsweise eine gereinigte Flüssigkeit von der Membran 110 wegzubewegen. Der Permeat-Spacer 140 kann insbesondere dann zum Einsatz kommen, wenn das Filterelement 100 zum Reinigen von einer Flüssigkeit geeignet sein soll.

Es kann vorgesehen sein, dass der Vibrationserzeuger 120 und der Permeat-Spacer 140 eine gemeinsame Schicht bilden, die das elektroaktive Polymer 121 enthält. Dies ist insbesondere dann möglich, wenn das elektroaktive Polymer 121 stabil in einer zu filternden Flüssigkeit ist. In diesem Fall wirkt das elektroaktive Polymer 121 der Fig. 1 ebenfalls als Permeat-Spacer 140.

Fig. 4 zeigt ein drittes Ausführungsbeispiel eines Filterelements 100, welches dem Filterelement 100 der Fig. 1 entspricht, sofern im Folgenden keine Unterschiede beschrieben sind.

Der Vibrationserzeuger 120 weist ein elektroaktives Polymer 121 auf, welches mit einer Isolationsschicht 126 umschlossen ist. Die Isolationsschicht 126 kann dabei flüssigkeitsdicht ausgeführt sein. Die Isolationsschicht 126 dient dazu, das elektroaktive Polymer 121 von einem zu filternden Gas beziehungsweise einer zu filternden Flüssigkeit zu isolieren. Dies ist insbesondere dann hilfreich, wenn die zu filternde Flüssigkeit ansonsten bei Anlegen einer Spannung an das elektroaktive Polymer 121 zu einem Kurzschluss führen könnte.

Das Filterelement 100 der Fig. 4 kann analog zum Filterelement 100 der Fig. 2 in das Rohr 130 eingesetzt werden. Analog zu Fig. 3 kann im Filterelement 100 der Fig. 4 ebenfalls ein Permeat-Spacer 140 zwischen der Membran 110 und dem Vibrationserzeuger 120 angeordnet werden.

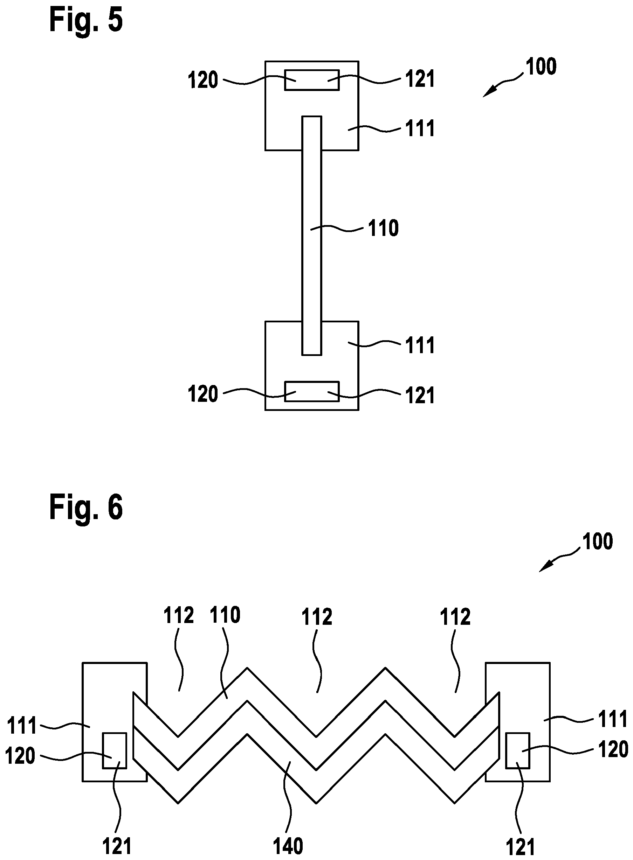

Fig. 5 zeigt ein viertes Ausführungsbeispiel eines Filterelements 100. Die Membran 110 ist in einem Membranhalter 111 gehalten. Innerhalb des Membranhalters 111 ist der Vibrationserzeuger 120 in Form des elektroaktiven Polymers 121 eingebettet. Dieses Ausführungsbeispiel ermöglicht den effizienten Aufbau des Filterelements 100, da in diesem Fall die Membran 110 in weiten Teilen innerhalb der Teile des Membranhalters 111 angeordnet ist und, wenn das Filterelement 100 der Fig. 5 in das Rohr 130 der Figur eingebaut ist, im Rohr 130 das zu filternde Gas beziehungsweise die zu filternde Flüssigkeit nur durch die Membran 110 durchdringen muss. Der Membranhalter 111 kann dabei umlaufend um die Membran 110 angeordnet sein. Ist dies der Fall, kann das elektroaktive Polymer 121 ebenfalls umlaufend um die Membran 110 angeordnet sein.

Fig. 6 zeigt ein fünftes Ausführungsbeispiel eines Filterelements 100, bei dem die Membran 110 in Form einer Taschenmembran ausgestaltet ist. Die Membran 110 weist drei Taschen 112 auf, wobei dadurch die Membran 110 eine Zickzack-Form aufweist. Auf einer Seite der Membran 110 ist ein Permeat-Spacer 140 angeordnet, der insbesondere dazu dient, zu erreichen, dass verschiedene Abschnitte der Membran 110 beabstandet zueinander angeordnet sind. Die Membran 110 ist wiederum in einem Membranhalter 111 angeordnet, der den Vibrationserzeuger 120 in Form des elektroaktiven Polymers 121 umfasst. Auch dieses Filterelement 100 kann wiederum in das Rohr 130 der Fig. 2 eingesetzt werden.

Es kann vorgesehen sein, auf der weiteren Seite des Permeat-Spacers 140 den Vibrationserzeuger 120 analog zur Fig. 3 vorzusehen und dafür den Membranhalter 111 wegzulassen. In diesem Fall ist der Permeat-Spacer 140 wiederum zwischen dem Vibrationserzeuger 120 und der Membran 110 angeordnet. Dies bedeutet, dass beispielsweise auch die in den Figuren 1, 3 und 4 gezeigten Filterelemente 100 in Form einer Taschenmembran ausgestaltet sein können.

Die Membran 110 kann in sämtlichen gezeigten Ausführungsbeispielen ein Polymer und/oder ein keramisches Material aufweisen.

Das in den Figuren 1 bis 6 gezeigte elektroaktive Polymer 121 kann aufgebaut sein wie in den Druckschriften US 2016/301330 A1 beziehungsweise US 9,195,058 offenbart. Hinsichtlich des Aufbaus und der Struktur des elektroaktiven Polymers wird auf die beiden genannten Druckschriften verwiesen und ihr Inhalt durch Rückbezug vollumfänglich aufgenommen.

Es kann vorgesehen sein, bei den in Fig. 5 beziehungsweise 6 gezeigten Ausführungsbeispielen des Filterelements weitere Membranen parallel zu der in den Figuren gezeigten Membran 110 vorzusehen. Beispielsweise könnten unterschiedliche Membranen genutzt werden, um unterschiedliche Partikel auszufiltern.

Durch die gezeigten Ausführungsbeispiele lassen sich folgende Vorteile realisieren: Durch die direkte Induktion der Vibrationen an den Membranen 110 mittels der elektroaktiven Polymere 121 sind deutlich geringe Vibrationsamplituden notwendig als im Stand der Technik, bei dem ganze Filterbaugruppen oder das gesamte Filterbauteil zu Vibrationen angeregt werden müssen. Ferner stellen elektroaktive Polymere robuste, skalierbare und energieeffiziente Vibrationserzeuger bereit. Durch die Vibration wird ein effizienter Reinigungsmechanismus möglich. Ferner kann es vorgesehen sein, die Vibration dynamisch zu regeln und beispielsweise die Vibration im Betrieb gepulst zu betreiben, eine Amplitude der Vibration über einen Effektivwert einer angelegten Wechselspannung zu steuern, eine Frequenz der Wechselspannung zu ändern und verschiedene Ansteuerungsarten zu verwenden. Es kann ferner vorgesehen sein, hinsichtlich der derzeit vorliegenden auszufilternden Partikel unterschiedliche Vibrationsmöglichkeiten zu verwenden. Dabei kann es insbesondere vorgesehen sein, für bestimmte Verschmutzungsarten beziehungsweise ausgefilterte Partikel ein eigens designtes Vibrationsprogramm zu verwenden.

Obwohl die Erfindung im Detail durch die bevorzugten Ausführungsbeispiele beschrieben wurde, ist die Erfindung nicht auf die offenbarten Beispiele eingeschränkt und andere Variationen hieraus können vom Fachmann abgeleitet werden, ohne den Schutzumfang der Erfindung zu verlassen.

## Patentansprüche

1. Filterelement (100) zur Stofftrennung, umfassend eine Membran (110) und einen Vibrationserzeuger (120), wobei der Vibrationserzeuger (120) ein elektroaktives Polymer (121) aufweist.

2. Filterelement (100) nach Anspruch 1, wobei ein Permeat-Spacer (140) an die Membran (110) angrenzt.

3. Filterelement (100) nach Anspruch 2, wobei der Permeat-Spacer (140) zwischen dem elektroaktiven Polymer (121) und der Membran (110) angeordnet ist.

4. Filterelement (100) nach Anspruch 2, wobei das elektroaktive Polymer (121) als Permeat-Spacer (140) wirkt.

5. Filterelement (100) nach Anspruch 1, wobei das elektroaktive Polymer (121) in einen Membranhalter (111) eingebettet ist, wobei die Membran (110) vom Membranhalter (111) gehalten wird.

6. Filterelement (100) nach einem der Ansprüche 1 bis 5, wobei das elektroaktive Polymer (121) stabil in einer zu filternden Flüssigkeit ist.

7. Filterelement (100) nach einem der Ansprüche 1 bis 6, wobei das elektroaktive Polymer (121) mit einer Isolationsschicht (126) flüssigkeitsdicht umschlossen ist.

8. Filterelement (100) nach einem der Ansprüche 1 bis 7, wobei die Membran (110) ein organisches Material, beispielsweise ein Polymer (121), und/oder ein keramisches Material aufweist.

9. Verfahren zum Betrieb eines Filterelements (100) nach einem der Ansprüche 1 bis 8, wobei das elektroaktive Polymer (121) zu Vibrationen angeregt wird.

10. Verfahren nach Anspruch 9, wobei eine Wechselspannung an das elektroaktive Polymer (121) angelegt wird, wobei die Wechselspannung eine Frequenz zwischen 50 und 200 Hertz aufweist, wobei die Wechselspannung einen Effektivwert zwischen fünfhundert Volt und drei Kilovolt aufweist.

11. Verfahren nach Anspruch 10, wobei die Frequenz und/oder der Effektivwert variiert werden.

12. Verfahren nach einem der Ansprüche 9 bis 11, wobei eine Durchlässigkeit der Membran (110) mittels des elektroaktiven Polymers (121) eingestellt wird.
